## Europäisches Patentamt
## European Patent Office
## Office européen des brevets

(19)

(11) Numéro de publication : **0 037 787**
**B1**

(12)

# FASCICULE DE BREVET EUROPÉEN

(45) Date de publication du fascicule du brevet :
13.06.84

(51) Int. Cl.³ : **G 01 J   3/18**

(21) Numéro de dépôt : 81400559.1

(22) Date de dépôt : 08.04.81

(54) Monochromateur.

(30) Priorité : 08.04.80 FR 8007849
26.09.80 FR 8020710
12.12.80 FR 8026465

(43) Date de publication de la demande :
14.10.81 Bulletin 81/41

(45) Mention de la délivrance du brevet :
13.06.84 Bulletin 84/24

(84) Etats contractants désignés :
DE FR GB

(56) Documents cités :
DE-A- 2 644 740
FR-A- 2 365 792
GB-A- 2 014 752
US-A- 3 883 223
US-A- 4 012 147
US-A- 4 148 556
APPLIED PHYSICS LETTERS, vol. 31 no. 3, août 1977,
pages 169-171 New York, US W.J. TOMLINSON et al.:
"Optical multiplexer for multimode fiber transmission
systems"
APPLIED OPTICS, vol. 16, no. 8, août 1977 New York,
US W.J. TOMLINSON: "Wavelength multiplexing in
multimode optical fibers", pages 2180-2194

(73) Titulaire : INSTRUMENTS S.A.
27, rue de la Rochefoucauld
F-75009 Paris (FR)

(72) Inventeur : Laude, Jean-Pierre
Les Graverlots
St Cyr La Riviere F-91690 Saclas (FR)

(74) Mandataire : Dupuy, Louis et al
CREUSOT-LOIRE 15 rue Pasquier
F-75363 Paris Cedex 8 (FR)

Jouve, 18, rue St-Denis, 75001 Paris, France

## Description

La présente invention concerne un monochromateur à réseau plan et miroir concave, présentant des qualités accrues de stigmatisme.

On connaît plusieurs modes d'association d'un miroir concave et d'un réseau de diffraction plan pour constituer un monochromateur. On en trouvera un exemple page 266 du volume IV de l'ouvrage « Progress in Optics » par E. WOLF et publié par NORTH-HOLLAND PUBLISHING COMPANY à Amsterdam. Dans ce cas une fente d'entrée constituant la source lumineuse envoie un faisceau sur un miroir concave qui réfléchit un faisceau parallèle sur le réseau plan ; les faisceaux diffractés parallèles sont renvoyés sur le miroir qui les focalise, et en réglant l'orientation du réseau on amène la longueur d'onde recherchée sur une fente de sortie. Les fentes d'entrée et de sortie sont disposées de part et d'autre du réseau, ce qui entraîne un astigmatisme important. Ceci n'est pas très gênant pour un monochromateur à fentes, mais constitue une perte considérable de lumière si l'on part d'une source quasi ponctuelle et que l'on veuille aussi recueillir la lumière monochromatique sous forme d'une tache quasi ponctuelle pour la détecter par un détecteur de dimensions très limitées.

On connaît aussi, dans le but de réduire l'astigmatisme, un montage décrit page 480 de l'ouvrage « Practical spectroscopy » de G. HARRISON publié par PRENTICE-HALL à New York. Dans ce cas les fentes d'entrée et de sortie sont placées derrière un miroir plan présentant un orifice. Le faisceau émis par la source d'entrée passe dans l'orifice, à travers le miroir plan, pour atteindre un miroir concave qui le réfléchit en un faisceau parallèle vers le miroir plan ; celui-ci le renvoie vers un système dispersif (ici à prisme associé à un autre miroir plan). Les faisceaux parallèles diffractés reviennent sur le miroir plan, puis sur le miroir concave pour être focalisés, et le faisceau monochromatique sélectionné passe par l'orifice du miroir plan pour atteindre la fente de sortie. On obtient ainsi un faible astigmatisme, mais on utilise au moins trois systèmes optiques ce qui conduit à nouveau à des problèmes de luminosité.

Le problème se pose par ailleurs d'utiliser des fibres optiques comme sources d'entrée et de sortie, en particulier pour des problèmes de multiplexage. Dans ces types d'applications, décrits par exemple à partir de la page 2 180 du numéro 8, volume 16, de la revue APPLIED OPTICS (Août 1977), les systèmes dispersifs proposés utilisent tous, soit un réseau concave corrigé de certaines aberrations, soit l'association d'un réseau plan et d'un système optique complémentaire de focalisation. Dans le premier cas le réseau concave ne peut pas être corrigé efficacement pour toutes les longueurs d'ondes à analyser ; dans l'autre cas les systèmes optiques complémentaires limitent l'utilisation dans l'ultraviolet et l'infra-rouge.

La présente invention permet l'utilisation de fibres optiques avec un système ne comportant qu'un réseau plan et un miroir concave, en limitant considérablement les défauts d'astigmatisme.

L'invention permet aussi de constituer un monochromateur double, et même multiple, c'est-à-dire un filtrage plus précis de la longueur d'onde recherchée, en utilisant un seul réseau de diffraction plan.

L'invention permet encore la réalisation de monochromateurs robustes et indéréglables, pouvant facilement constituer des composants préfabriqués entrant dans des appareils plus complexes.

L'invention s'applique à un monochromateur du type comportant une source lumineuse d'entrée illuminant un miroir concave sphérique ou parabolique produisant un faisceau parallèle dirigé vers un réseau de diffraction plan, le miroir concave recevant en retour les différents faisceaux parallèles diffractés par le réseau dont les caractéristiques et l'orientation sont déterminées de sorte que le miroir concave focalise sur une ou plusieurs sorties la ou les longueurs d'ondes recherchées.

Selon l'invention la source lumineuse d'entrée est constituée par l'extrémité d'une fibre optique placée en avant ou au niveau du réseau et au voisinage immédiat du foyer du miroir concave ; la ou les sorties sont également constituées par la ou les extrémités de fibres optiques situées en avant ou au niveau du réseau et au voisinage immédiat tant de l'axe formé par la normale au sommet du miroir concave que de la source lumineuse d'entrée.

Selon une forme de réalisation, pour constituer un monochromateur à étages de diffraction additionnels, l'autre extrémité de la fibre de sortie est disposée en avant ou au niveau d'une partie différente du même réseau plan, pour constituer dans les mêmes conditions une deuxième source lumineuse d'entrée vers un deuxième miroir concave, une deuxième fibre de sortie étant disposée au voisinage immédiat de l'axe formé par la normale au sommet de ce deuxième miroir, cette deuxième fibre de sortie pouvant elle-même à son tour être utilisée comme troisième source d'entrée pour un troisième étage de diffraction et ainsi de suite.

Selon une forme préférentielle de réalisation le réseau plan est percé d'un orifice dans l'axe de la normale au sommet de chaque miroir concave et à travers lequel passent au moins certaines fibres optiques.

Egalement selon une forme préférentielle de réalisation chaque miroir concave comporte un cache disposé de façon à arrêter les rayons incidents issus de la source lumineuse d'entrée qui seraient réfléchis directement vers la ou les sorties sans passer par le réseau.

Selon encore une autre forme de réalisation, pour constituer un monochromateur inéréglable, le monochromateur est constitué par un ensemble monobloc au moyen d'un premier bloc de verre présentant d'une part une face convexe sur laquelle est déposé un revêtement réfléchissant pour former le miroir concave vers l'intérieur du bloc, et d'autre part une surface plane s'étendant sensiblement transversalement à la normale au sommet du miroir, surface plane sur laquelle est collé le réseau de diffraction plan, lui-même formé sur un deuxième bloc dans lequel sont noyées les extrémités de la fibre d'entrée et de la ou des fibres de sortie de façon à aboutir au voisinage de l'axe de la normale au sommet du miroir et jusqu'au niveau du plan du réseau.

L'invention sera mieux comprise en se référant à des modes de réalisation particuliers donnés à titre d'exemples et représentés par les dessins annexés.

La figure 1 constitue une vue en bout du dispositif, qu'il soit simple ou double.

La figure 2, pour un monochromateur double, est une coupe selon II-II de la figure 1.

Les figures 3 et 4 concernent le mode de réalisation en ensemble monobloc.

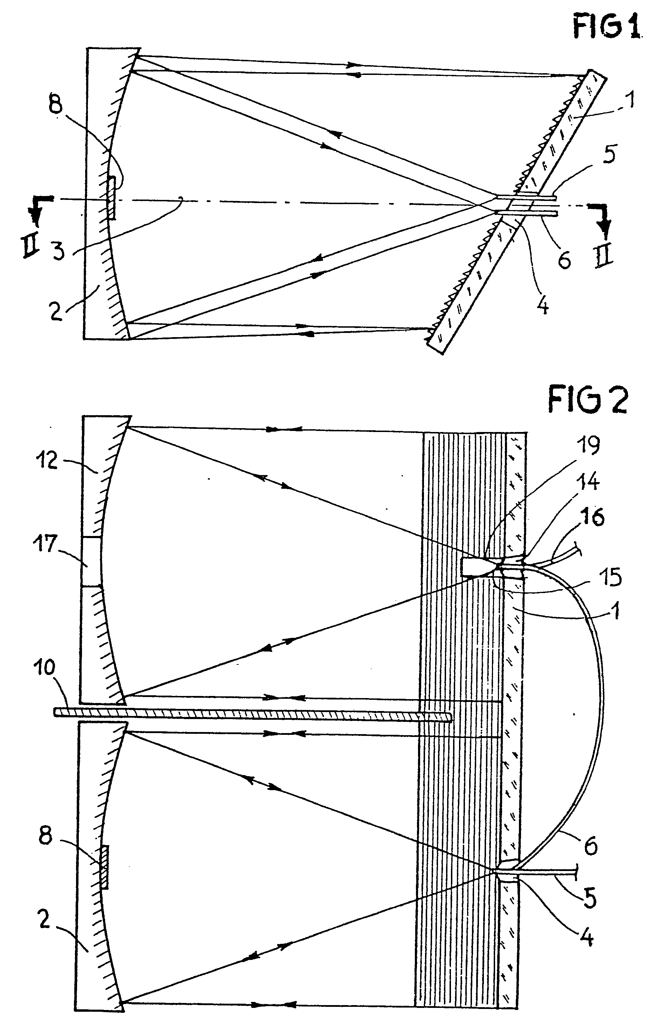

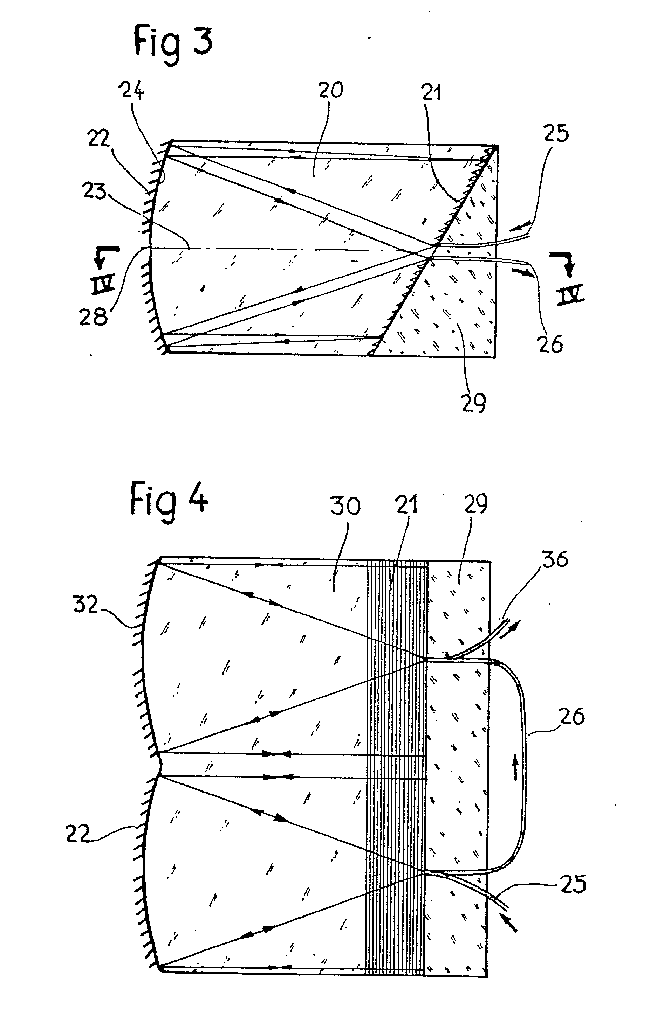

La figure 3 est comparable à la figure 1 et constitue une vue en bout du monochromateur, qu'il soit simple ou double.

La figure 4, qui est une coupe selon IV-IV de la figure 3, concerne uniquement le cas d'un monochromateur double.

En se référant tout d'abord à la figure 1, on verra que le système est constitué par un réseau plan de diffraction 1, disposé devant un miroir concave 2. Dans l'axe 3 de la normale au sommet du miroir le réseau est percé d'un orifice 4 conique, allant en s'évasant vers l'arrière du support du réseau. Une fibre optique 5 passe à travers l'orifice 4, de façon à ce que son extrémité soit au foyer du miroir 2. La lumière à analyser est introduite en amont dans la fibre optique 5 de telle sorte que son extrémité constitue la source d'entrée dans le monochromateur. La lumière issue de la fibre 5 est réfléchie par le miroir 2 en un faisceau parallèle qui arrive sur le réseau. Celui-ci le disperse et le miroir 2 focalise le spectre au niveau de l'extrémité d'une autre fibre optique 6 passant également dans l'orifice 4.

Les caractéristiques et l'orientation du réseau sont déterminées de façon à ce que la focalisation de la longueur d'onde recherchée soit au voisinage immédiat de l'axe 3 du miroir ; la distance entre les deux fibres optiques d'entrée et de sortie est alors très faible, et les aberrations du système ne sont que les aberrations d'un miroir concave au voisinage de son centre. Il s'agit de l'aberration sphérique, si le miroir est sphérique et cette aberration est nulle s'il s'agit d'un miroir parabolique que l'on peut utiliser pour le miroir 2.

On pourra aussi disposer plusieurs fibres optiques de sortie comme la fibre 6, pour recueillir plusieurs longueurs d'ondes ; pour éviter les lumières parasites, on disposera de préférence les fibres de sortie légèrement en dehors du plan de figure contenant la fibre d'entrée 5.

Dans une réalisation réelle on a utilisé des fibres comportant un cœur en silice de 1 mm de diamètre, dont l'ouverture d'extrémité permettait de couvrir un miroir sphérique de diamètre 60 mm et de rayon 160 mm. On a utilisé un réseau à 1 200 traits par millimètre en travaillant dans l'ordre 1 de diffraction.

On utilisera également de préférence un cache 8 au centre du miroir 2, qui a pour effet d'arrêter des rayons incidents issus de la source 5 et qui seraient réfléchis directement par le miroir 2 vers la sortie 6 sans passer par le réseau 1.

On a aussi observé que ce cache pouvait être efficacement rectangulaire, avec sa grande dimension dans la direction du spectre formé, de façon à arrêter les rayons secondaires issus des portions de spectre non captées par les sorties, et qui autrement seraient réfléchis en retour.

L'élément important dans une telle réalisation est de regrouper l'entrée et la ou les sorties au voisinage de la normale au sommet du miroir concave. L'orifice dans le réseau permet à la fois ce regroupement et l'amenée de l'extrémité des fibres en avant ou au niveau du réseau, pour profiter de la pleine ouverture de celles-ci. Le réseau doit alors être placé en arrière du foyer du miroir concave.

On pourrait en variante ne pas faire passer les fibres par l'orifice, mais l'utiliser pour y faire passer des organes mécaniques de maintien de fibres optiques placés en avant du réseau et au voisinage de l'axe. On obtiendrait aussi une disposition équivalente au moyen de petits miroirs tenus mécaniquement à travers l'orifice du réseau, et permettant de recueillir la lumière d'entrée émise par une fibre optique disposée latéralement, et de la même façon de renvoyer latéralement la lumière de sortie vers une ou plusieurs autres fibres optiques.

On pourrait aussi envisager une solution mixte, avec certaines fibres optiques engagées dans l'orifice, et d'autres entièrement en avant du réseau, avec des supports mécaniques dans l'orifice pour tenir la fibre elle-même ou un miroir de renvoi.

En se référant maintenant à la figure 2, on verra que le réseau plan 1 est ici disposé devant deux miroirs concaves 2 et 12, de façon à constituer deux systèmes optiques en parallèle fonctionnant chacun comme celui décrit plus haut pour la figure 1. On retrouve ainsi la fibre 5 qui transmet la lumière à analyser, et qui passe à travers l'orifice 4 de telle sorte que son extrémité constitue la source d'entrée dans le monochromateur. La lumière issue de la fibre 5 est réfléchie par le miroir 2 en un faisceau parallèle qui arrive sur le réseau. Celui-ci le disperse et le miroir 2 focalise le spectre formé au niveau de l'extrémité de la fibre 6 passant également dans l'orifice 4, et qui ne recueille que la longueur d'onde recherchée.

Mais ici la fibre 6, au lieu de constituer la sortie finale de l'appareil, est renvoyée vers un deuxième orifice 14 pour constituer une source d'entrée 15 face au deuxième miroir 12. Ce deuxième étage monochromateur fonctionne dans les mêmes conditions que le premier, et la longueur d'onde recherchée est recueillie à l'extrémité d'une deuxième fibre de sortie 16. On obtient ainsi, comme sur tout monochromateur double, un meilleur filtrage de la lumière par rapport à un monochromateur simple, mais on utilise ici qu'un seul réseau.

Un cache 10, interposé entre les deux parties du monochromateur double permet d'éliminer la lumière parasite qui pourrait passer d'un étage à l'autre du monochromateur.

On pourra noter que les longueurs d'onde passant dans chacun des deux monochromateurs ainsi en série restent coïncidentes lorsque l'on procède au balayage par rotation du réseau 1 autour d'un axe parallèle aux traits et passant par les deux orifices 4 et 14.

On a ici représenté sur le miroir 2 un cache 8 destiné, comme indiqué à la figure 1, à éliminer les rayons incidents issus de la source et qui seraient réfléchis directement par le miroir vers la sortie sans passer par le réseau.

Mais on peut obtenir un effet tout à fait identique en perçant le miroir en son centre, par un orifice 17 comme représenté sur le miroir 12. On pourrait également, à la place du cache 8 ou de l'orifice 17, disposer un petit miroir d'orientation renvoyant en dehors du système la lumière directement reçue dans cette zone centrale.

Il avait également été souligné à propos de la figure 1 qu'on pouvait utiliser sur le miroir concave un cache rectangulaire ayant sa grande dimension dans la direction du spectre formé, c'est-à-dire perpendiculairement aux traits du réseau. On obtiendra aussi le même effet de suppression de rayons parasites en prévoyant de part et d'autre de l'orifice 4 ou 14, et perpendiculairement aux traits, une zone miroir lisse 19 représentée ici seulement autour de l'orifice 14. Cette zone miroir pourra facilement être réalisée par exemple par photogravure sur la matrice gravée mécaniquement et utilisée pour la reproduction du réseau par copie ; dans le cas d'un réseau holographique cette zone miroir 19 pourra être obtenue en interposant un cache devant le support en cours d'enregistrement des franges d'interférence. La zone miroir 19 permettra de renvoyer en dehors du champ la partie du spectre non captée par les fibres de sortie, diminuant ainsi le taux de lumière parasite.

Sur cette figure 2 on a représenté un monochromateur double, mais on pourrait également réaliser un monochromateur triple en renvoyant la fibre de sortie 16 vers un autre orifice pour constituer une troisième source d'entrée devant un autre miroir concave, et ainsi de suite.

En se référant ensuite à la figure 3, on voit qu'un ensemble monobloc est constitué par un bloc de verre 20 présentant une partie convexe sphérique ou parabolique 24. Cette surface est rendue réfléchissante par un revêtement 22 qui constitue ainsi, vers l'intérieur du bloc, un miroir concave dont l'axe principal 23 est la normale au sommet de la surface 24.

Le revêtement réfléchissant 22 est interrompu sur une petite zone centrale 28 au voisinage du sommet de la partie convexe. Le bloc 20 présente, à l'extrémité opposée à la surface courbe 24, une surface plane sur laquelle est collé un deuxième bloc prismatique 29 présentant une surface plane conjuguée. Sur cette surface plane est tracé un réseau plan de diffraction 21. Deux fibres optiques 25 et 26 sont noyées dans le bloc 29 de telle sorte que leurs extrémités arrivent au niveau du plan du réseau 21, et dans l'axe principal 23 du miroir 22.

On voit qu'on a ainsi reconstitué, en un ensemble monobloc, et en déterminant convenablement les dimensions et orientations relatives des deux blocs collés 20 et 29, les conditions de fonctionnement optique du monochromateur décrit à la figure 1. Si la fibre 25 est la fibre d'entrée on recueillera sur l'extrémité de la fibre de sortie 26 la longueur d'onde recherchée après une première réflexion sur le miroir 22, diffraction du faisceau parallèle sur le réseau 21, et focalisation par deuxième réflexion du faisceau spécifique sur le miroir 22. Mais on dispose ici d'un élément monobloc indéréglable. Bien entendu on peut aussi prévoir plusieurs fibres de sortie 26 si l'on veut recueillir à la fois plusieurs longueurs d'ondes.

La zone non réfléchissante 28 joue le même rôle que le cache 8 de la figure 1 ou l'orifice 17 de la figure 2 pour éliminer les rayons incidents issus de la source 25 et qui seraient réfléchis directement par le miroir 22 vers la sortie 26 sans passer par le réseau 21.

L'invention peut s'appliquer de la même façon à un monochromateur double du type décrit à la figure 2, comme on le voit sur la figure 4, qui est optiquement équivalente à la figure 2. Ici le bloc 30 comporte deux surfaces convexes qui permettent la réalisation de deux miroirs concaves 22 et 32 vers l'intérieur du bloc. La fibre 26 a ses deux extrémités noyées dans le bloc 29 portant le réseau unique 21. L'une des extrémités de la fibre 26, associée à la fibre d'entrée 25, constitue la sortie du premier étage du monochromateur, tandis que son autre extrémité joue le rôle de source pour le deuxième étage, la lumière sélectionnée étant finalement recueillie par la fibre 36.

Dans le cas d'un monochromateur double selon la figure 4, on pourrait aussi imaginer, pour en faciliter la fabrication, que le bloc 30 soit lui-même en deux parties collées après juxtaposition, et collées ensemble sur le même bloc porte-réseau 29.

## Revendications

1. Monochromateur du type comportant une source lumineuse d'entrée (5) illuminant un miroir concave (2) sphérique ou parabolique produisant un faisceau parallèle dirigé vers un réseau de diffraction plan (1), le miroir concave (2) recevant en retour les différents faisceaux parallèles diffractés par le réseau (1) dont les caractéristiques et l'orientation sont déterminées de sorte que le miroir concave focalise sur une ou plusieurs sorties (6) la ou les longueurs d'ondes recherchées, caractérisé par le fait que :

— la source lumineuse d'entrée (5) est constituée par l'extrémité d'une fibre optique placée en avant ou au niveau du réseau (1) et au voisinage immédiat du foyer du miroir concave (2), et

— la ou les sorties (6) sont également constituées par la ou les extrémités de fibres optiques situées en avant ou au niveau du réseau (1) et au voisinage immédiat tant de l'axe formé par la normale au sommet du miroir concave (2) que de la source lumineuse d'entrée (5).

2. Monochromateur selon la revendication 1, caractérisé par le fait que, pour prévoir des étages de diffraction additionnels, l'autre extrémité de la fibre de sortie (6) est disposée en avant ou au niveau d'une partie différente du même réseau plan (1), pour constituer dans les mêmes conditions une deuxième source lumineuse (15) d'entrée vers un deuxième miroir concave (12), une deuxième fibre de sortie (16) étant disposée au voisinage immédiat de l'axe formé par la normale au sommet de ce deuxième miroir (12), cette deuxième fibre de sortie (16) pouvant elle-même à son tour être utilisée comme troisième source d'entrée pour un troisième étage de diffraction et ainsi de suite.

3. Monochromateur selon l'une quelconque des revendications 1 ou 2, caractérisé par le fait que le réseau plan (1) est percé d'un orifice (4-14) dans l'axe de la normale au sommet de chaque miroir concave (2-12) et à travers lequel passent au moins certaines fibres optiques (5-6-15-16).

4. Monochromateur selon l'une quelconque des revendications 1 ou 2, caractérisé par le fait que le réseau plan (1) est percé d'un orifice (4-14) dans l'axe de la normale au sommet de chaque· miroir concave (2-12), et à travers lequel passent des organes mécaniques de maintien de fibres optiques (5-6-15-16).

5. Monochromateur selon l'une quelconque des revendications précédentes, caractérisé par le fait que chaque miroir concave (2-12) comporte un cache (8) disposé de façon à arrêter les rayons incidents issus de la source lumineuse d'entrée (5-15) qui seraient réfléchis directement vers la ou les sorties (6-16) sans passer par le réseau (1).

6. Monochromateur selon la revendication 5, caractérisé par le fait que chaque cache (8) est prolongé, parallèlement au spectre formé, de façon à arrêter les rayons secondaires issus des portions de spectre non captées par les sorties (6-16), et qui seraient réfléchis en retour.

7. Monochromateur selon l'une quelconque des revendications 1 à 4, caractérisé par le fait que chaque miroir concave (2-12) est percé d'un orifice (17) au voisinage de son sommet.

8. Monochromateur selon la revendication 3, caractérisé par le fait que le réseau (1) comporte, autour de chaque orifice (4-14) de passage des fibres optiques, et perpendiculairement aux traits du réseau, une zone miroir (19) dépourvue de traits.

9. Monochromateur selon la revendication 1, caractérisé par le fait qu'il est constitué par un ensemble monobloc au moyen d'un premier bloc de verre (20) présentant d'une part une face convexe (24) sur laquelle est déposé un revêtement réfléchissant (22) pour former le miroir concave vers l'intérieur du bloc (20), et d'autre part une surface plane s'étendant sensiblement transversalement à la normale (23) au sommet du miroir (22), surface plane sur laquelle est collé le réseau de diffraction plan (21), lui-même formé sur un deuxième bloc (29) dans lequel sont noyées les extrémités de la fibre d'entrée (25) et de la ou des fibres de sortie (26) de façon à aboutir au voisinage de l'axe de la normale (23) au sommet du miroir (22) et jusqu'au niveau du plan du réseau (21).

10. Monochromateur selon les revendications 2 et 9, caractérisé par le fait que deux miroirs concaves (22-32) sont formés de la même façon l'un à côté de l'autre sur le même bloc de verre (30) avec leurs normales aux sommets parallèles, et par le fait que le réseau plan (21) collé sur la surface plane s'étend face aux deux miroirs concaves (22, 32), l'une des fibres de sortie (26) dont une extrémité est noyée dans le deuxième bloc (29) au voisinage de l'axe à la normale au sommet de l'un des miroirs concaves (22) ayant sa deuxième extrémité également noyée dans le même bloc (29) au voisinage de l'axe à la normale au sommet de l'autre miroir concave (32), pour constituer la fibre d'entrée d'un deuxième étage de monochromateur.

11. Monochromateur selon l'une quelconque des revendications 9 ou 10, caractérisé par le fait que le revêtement réfléchissant (22-32) est interrompu sur une zone au voisinage du sommet de chaque face convexe, de façon à arrêter les rayons incidents qui seraient réfléchis directement vers les sorties (26-36), ainsi que les rayons secondaires issus des portions de spectre non captées par les sorties (26-36) et qui seraient réfléchis en retour.

## Claims

1. A monochromator of the type comprising an entry light source (5) which illuminates a spherical or parabolic concave mirror (2) producing a parallel beam directed towards a plane diffraction grating (1), the concave mirror (2) receiving back the various parallel beams diffracted by the grating (1) whose characteristics and positioning are determined so that the concave mirror focuses the required wavelength or wavelengths on one or more exits (6), characterised in that :

— the entry light source (5) consists of the end of an optical fibre placed in front of or at the level of the grating (1) and in the immediate vicinity of the focus of the concave mirror (2), and

— the exit or exits (6) also consist of the end or ends of optical fibres situated in front of or at the level of the grating (1) and in the immediate vicinity both of the axis formed by the normal to the vertex of the concave mirror (2), and of the entry light source (5).

2. A monochromator according to claim 1, characterised in that, in order to provide additional diffraction stages, the other end of the exit fibre (6) is arranged in front of or at the level of a different part of the same plane grating (1) to form, under the same conditions, a second entry light source (15) towards a second concave mirror (12), a second exit fibre (16) being arranged in the immediate vicinity of the axis formed by the normal to the vertex of this second mirror (12), this second exit fibre (16) being itself, in turn, capable of being employed as a third entry source for a third diffraction stage and so on.

3. A monochromator according to either of Claims 1 or 2, characterised in that the plane grating (1) is pierced by an orifice (4, 14) in the axis of the normal to the vertex of each concave mirror (2, 12), through which orifice at least certain optical fibres (5, 6, 15, 16) pass.

4. A monochromator according to either of Claims 1 or 2, characterised in that the plane grating (1) is pierced by an orifice (4, 14) in the axis of the normal to the vertex of each concave mirror (2, 12), through which orifice mechanical components for the support of optical fibres (5, 6, 15, 16) pass.

5. A monochromator according to any one of the preceding claims, characterised in that each concave mirror (2, 12) comprises a trap (8) arranged so as to stop the incident rays originating from the entry light source (5, 15), which rays would be reflected directly towards the exit or exits (6, 16) without passing through the grating (1).

6. A monochromator according to Claim 5, characterised in that each trap (8) is extended, in parallel with the spectrum formed, so as to stop the secondary rays originating from the parts of spectrum which are not collected by the exits (6, 16) and which would be reflected back.

7. A monochromator according to any one of Claims 1 to 4, characterised in that each concave mirror (2, 12) is pierced by an orifice (17) in the vicinity of its vertex.

8. A monochromator according to Claim 3, characterised in that the grating (1) comprises, around each passage orifice (4, 14) for the optical fibres, and perpendicular to the lines of the grating, a mirror zone (19) devoid of lines.

9. A monochromator according to Claim 1, characterised in that it consists of a monoblock assembly by means of a first block of glass (20) presenting, on the one hand, a convex face (24) on which is deposited a reflecting coating (22) to form the concave mirror towards the interior of the block (20) and, on the other hand, a plane surface extending substantially transversely to the normal (23) to the vertex of the mirror (22), to which plane surface is glued the plane diffraction grating (21), itself formed on a second block (29) in which are embedded the ends of the entry fibre (25) and of the exit fibre or fibres (26) so as to end in the vicinity of the axis of the normal (23) to the vertex of the mirror (22) and at the level of the plane of the grating (21).

10. A monochromator according to Claims 2 and 9, characterised in that two concave mirrors (22, 32) are formed in the same manner one beside the other on the same block of glass (30) with their normals to the vertices being parallel, and in that the plane grating (21) glued to the plane surface extends opposite the two concave mirrors (22, 32), one of the exit fibres (26), one end of which is embedded in the second block (29) in the vicinity of the axis normal to the vertex of one of the concave mirrors (22), having its second end also embedded in the same block (29) in the vicinity of the axis normal to the vertex of the other concave mirror (32), to constitute the entry fibre of a second monochromator stage.

11. A monochromator according to either of Claims 9 or 10, characterised in that the reflecting coating (22, 32) is interrupted over a zone in the vicinity of the vertex of each convex face, so as to stop the incident rays which would be reflected directly towards the exits (26, 36), as well as the secondary rays originating from the parts of spectrum which are not collected by the exits (26, 36) and which would be reflected back.

## Ansprüche

1. Monochromator mit einer Eintrittslichtquelle (5), die einen parabolischen oder sphärischen Hohlspiegel (2) beleuchtet, der ein auf ein Planbeugungsgitter (1) gerichtetes Parallellichtbündel erzeugt, wobei die verschiedenen durch das bestimmte Merkmale und Ausrichtung aufweisende Gitter (1) abgebeugten Parallellichtbündel zu dem Hohlspiegel (2) rückgestrahlt werden, sodaß der Hohlspiegel die gesuchte(n) Wellenlänge(n) auf einen oder mehrere Austritt(e) (6) fokussiert, dadurch gekennzeichnet, daß :
— die Eintrittslichtquelle (5) aus dem Ende einer Lichtleitfaser besteht, die vor oder in gleicher Ebene mit dem Gitter (1) und in unmittelbarer Nähe des Brennpunktes des Hohlspiegels (2) liegt, und
— der oder die Austritt(e) (6) ebenfalls aus dem oder den Lichtleitfaserende(n) besteht oder bestehen, das (die) vor oder in gleicher Ebene mit dem Gitter (1) und in unmittelbarer Nähe sowohl der durch die Normale am Scheitel des Hohlspiegels (2) gebildete Achse als auch der Eintrittslichtquelle (5) liegt oder liegen.

2. Monochromator nach Anspruch 1, dadurch gekennzeichnet, daß zur Bildung zusätzlicher Beugungsstufen das andere Ende der Austrittslichtleitfaser (6) vor oder in gleicher Ebene mit einem anderen Teil desselben Plangitters (1) liegt, um somit unter denselben Bedingungen eine zweite auf einen zweiten Hohlspiegel (12) gerichtete Eintrittslichtquelle (15) zu bilden, wobei eine zweite Austrittslichtleitfaser (16) in unmittelbarer Nähe der durch die Normale am Scheitel dieses zweiten Spiegels (12) gebildete Achse angeordnet ist, und wobei diese zweite Austrittslichtleitfaser (16) ihrerseits als dritte Eintrittslichtquelle für eine dritte Beugungsstufe und so weiter verwendet werden kann.

3. Monochromator nach einem der Ansprüche 1 oder 2, dadurch gekennzeichnet, daß das Plangitter (1) in der Achse der Normale am Scheitel des jeweiligen Hohlspiegels (2-12) eine Öffnung (4-14) aufweist, die von mindestens einigen Lichtleitfasern (5-6-15-16) durchquert wird.

4. Monochromator nach einem der Ansprüche 1 oder 2, dadurch gekennzeichnet, daß das Plangitter (1) in der Achse der Normale am Scheitel des jeweiligen Hohlspiegels (2-12) eine Öffnung (4-14) aufweist, die von mechanischen Gliedern zum Festhalten der Lichtleitfasern (5-6-15-16) durchquert wird.

5. Monochromator nach einem der vorhergehenden Ansprüche, dadurch gekennzeichnet, daß jeder Hohlspiegel (2-12) eine Abdeckung (8) aufweist zum Abfangen der von der Eintrittslichtquelle (5-15) einfallenden Strahlen, welche ohne Ablenkung durch das Plangitter (1) direkt zu der oder den Austrittslichtleitfaser(n) (6-16) reflektiert würden.

6. Monochromator nach Anspruch 5, dadurch gekennzeichnet, daß parallel zu dem gebildeten Spektrum jede Abdeckung (8) verlängert ist, um somit die Sekundärstrahlen von den durch die Austrittslichtleitfasern (6-16) nicht abgefangenen Spektrumteilen aufzuhalten, die zurückgestrahlt würden.

7. Monochromator nach einem der Ansprüche 1 bis 4, dadurch gekennzeichnet, daß in der Nähe seines Scheitels jeder Hohlspiegel (2-12) eine Öffnung (17) aufweist.

8. Monochromator nach Anspruch 3, dadurch gekennzeichnet, daß rings um jede Durchgangsöffnung (4-14) der Lichtleitfasern und senkrecht zu den Gitterstrichen das Gitter (1) eine Strichlose Spiegelzone (19) aufweist.

9. Monochromator nach Anspruch 1, dadurch gekennzeichnet, daß er aus einer einteiligen Einheit besteht mit einem ersten Glasblock (20), der einerseits eine nach aussen gewölbte Fläche (24) aufweist, auf welcher zur Bildung des nach innen in den Glasblock (20) gerichteten Hohlspiegels ein reflektierender Überzug (22) aufgetragen wird, und anderseits eine sich wesentlich quer zur Normalen (23) am Scheitel des Spiegels (22) erstreckende Planfläche, auf die das Planbeugungsgitter (21) aufgeklebt ist, das seinerseits auf einem zweiten Block (29) gebildet ist, in welchem die Enden der Eintrittslichtleitfaser (25) und der Austrittslichtleitfaser(n) (26) derart eingebettet sind, daß sie in der Nähe der Achse der Normalen (23) am Scheitel des Spiegels (22) und bis zur Ebene des Gitters (21) münden.

10. Monochromator nach Anspruch 2 und 9, dadurch gekennzeichnet, daß beide Hohlspiegel (22-32) nebeneinander auf demselben Glasblock (30) mit den Normalen an den parallelen Scheiteln auf dieselbe Art und Weise ausgebildet sind, und daß das auf der Planfläche aufgeklebte Plangitter (21) sich gegenüber den beiden Hohlspiegel (22, 32) erstreckt, wobei zur Bildung der Eintrittslichtleitfaser einer zweiten Monochromatorstufe ein Ende einer Austrittslichtleitfaser (26) in der Nähe der Achse zur Normalen am Scheitel von einem Hohlspiegel (22) in dem zweiten Block (29) eingebettet ist und das zweite Ende in der Nähe der Achse zur Normalen am Scheitel des anderen Hohlspiegels (32) ebenfalls in demselben Block (29) eingelassen ist.

11. Monochromator nach einem der Ansprüche 9 oder 10, dadurch gekennzeichnet, daß der reflektierende Überzug (22-32) in der Nähe des Scheitels der jeweiligen nach aussen gewölbten Fläche über einen Bereich unterbrochen ist um die einfallenden Strahlen, die direkt zu den Austritten (26-36) reflektiert würden, abzufangen sowie die Sekundärstrahlen von den durch die Austritte (26-36) nicht abgefangenen Spektrumteilen, die zurückgestrahlt würden.

# FIG 1

# FIG 2

## Fig 3

## Fig 4